# EUROPÄISCHE PATENTANMELDUNG

(11) **EP 2 255 862 A1**
(43) Veröffentlichungstag der Anmeldung: **01.12.2010**
(21) Anmeldenummer: 10004370.2
(22) Anmeldetag: 24.04.2010
(51) Int. Cl.: B01D 35/06, F01M 5/00, F28F 19/01, B01D 29/11, F01P 11/06, F28D 9/00

(54) **Rückhaltevorrichtung**

(30) Priorität: 28.04.2009 DE 102009018901
(71) Anmelder: DEUTZ Aktiengesellschaft, 51149 Köln (DE)
(72) Erfinder: Klocke, Michael, 42715 Solingen (DE); Kaletsch, Kai, 40597 Düsseldorf (DE); Hrdina, Vladislav, 51065 Köln (DE)

(57) **Zusammenfassung**

2. Die Erfindung betrifft eine Rückhaltevorrichtung, umfassend wenigstens ein eine definierte Trenngrenze aufweisendes Rückhalteflächenelement, wenigstens ein Dichtelement und wenigstens ein Abstandshalteelement.

## Beschreibung

Die Erfindung betrifft eine Rückhaltevorrichtung, insbesondere für den Kühler in einem Kühlkreislauf einer Brennkraftmaschine.

Aus der DE102005010236 ist ein Kühlkreislauf für eine Brennkraftmaschine eines Kraftfahrzeugs bekannt, mit einem Verbrennungsmotor; einer stromauf des Verbrennungsmotors angeordneten Pumpvorrichtung zum Pumpen eines Kühlmittels durch den Verbrennungsmotor; einem Kühler, dessen Einlassseite über eine erste Kühlmittelleitung mit der Auslassseite des Verbrennungsmotors verbunden ist und dessen Auslassseite über eine zweite Kühlmittelleitung mit der Einlassseite der Pumpvorrichtung verbunden ist, zum Kühlen des Kühlmittels; einer Kühler-Bypassleitung, welche die Auslassseite des Verbrennungsmotors unter Umgehung des Kühlers direkt mit der Einlassseite der Pumpvorrichtung verbindet; und einem Schaltventil, das in der zweiten Kühlmittelleitung zwischen dem Kühler und der Pumpvorrichtung angeordnet ist, zum wahlweisen Öffnen und Schließen der zweiten Kühlmittelleitung und der Kühler-Bypassleitung sowie einem Filter. Zum sicheren Entlüften der zweiten Kühlmittelleitung während des Befüllprozesses ist ferner ein Schaltventil-Bypasskanal vorgesehen, der die zweite Kühlmittelleitung unter Umgehung des Schaltventils direkt mit der Einlassseite der Pumpvorrichtung verbindet.

Weiter ist aus der DE19731852 ein Generatorkühlsystem für einen in einem Kraftwerk zur Stromerzeugung eingesetzten Generator bekannt. Der Generator weist einen Generatorkühler auf, der zusammen mit weiteren Kühlern in einem geschlossenen Zwischenkühlkreislauf angeordnet ist, wobei der Zwischenkühlkreislauf über wenigstens einen Zwischenkühler Wärme an ein Hauptkühlwassersystem abgibt. Im Zwischenkühlkreislauf sind Mittel vorgesehen, die die Wärmeübertragung von dem Generatorkühler in das Hauptkühlwassersystem verbessern. Vor den Zwischenkühlern ist im Hauptkühlwassersystem ein Wasserfilter angeordnet.

Des Weiteren werden zur Kühlung z. B. des Motoröls Öl/Wasser Ölkühler in Aluminium-Schalenbauweise verwendet.

Daran ist nachteilig, dass Restpartikel, insbesondere im Kühlwasserkreislauf, die aus Kurbelgehäuse und Zylinderkopf stammen und auch bei intensiver Reinigung der Teile nie ganz ausgeschlossen werden können, sich z. B. am Eintritt des Ölkühlers ablagern. Diese Restpartikel, die beispielsweise aus Eisen und ferritischem Guss bestehen können, verhaken sich zwischen den Wärmetauscherschalen, da sie die engen Turbolatoren nicht passieren können. Aufgrund der sehr unterschiedlichen Materialeigenschaften führt dies zu galvanischer Loch-Korrosion und in der Folge zu Leckagen zwischen Öl- und Wasserkreislauf und somit zu einem Systemausfall.

Es ist Aufgabe der vorliegenden Erfindung, die vorgenannten Nachteile zu verhindern und ein Verfahren und eine Vorrichtung zu schaffen, die korrosions- und systemausfallfrei betreibbar sind.

Die Rückhaltevorrichtung hilft vorteilhafterweise Kontaktkorrosion oder auch Bimetallkorrosion zu vermeiden. Die geometrischen Gegebenheiten, wie z. B. das Flächenverhältnis und der Abstand zwischen den Bauteilen aus unterschiedlichen Werkstoffen, haben einen wesentlichen Einfluss auf die Kontaktkorrosion, die durch Einbau einer Rückhaltevorrichtung verhindert wird.

Zur Vermeidung eines derartigen Partikeleintrags in den besagten Ölkühler kann ein in den wasserseitigen Zulauf des Ölkühlers eingesetzter Partikelabscheider integriert werden. Der Partikelabscheider, vorzugsweise als Sieb oder Filter, generell aber auch als Vlies oder ein ähnliches textiles Flächengebilde ausführbar, kann wahlweise im Hauptvolumenstrom oder im Nebenstrom, in jedem Fall aber vor dem zu schützenden Kühler angeordnet sein. Generell lassen sich so auch noch andere Wärmetauscher im Kühlkreislauf, die in ähnlicher Bauweise ausgeführt sind, schützen.

Die Rückhaltefläche der partikelabscheidenden Rückhaltevorrichtung kann vorzugsweise aus siebartigem Edelstahl, Kunststoff oder anderen korrosionsbeständigen Materialien bestehen. Sie wird so ausgeführt, dass die sich darin sammelnden Partikel den Strömungsquerschnitt nicht nennenswert beeinflussen. Sie weist z. B. einen größeren Strömungsquerschnitt auf als der Kühlereintritt bzw. die einzelnen Eintritte in die Kühlerplatten, wodurch der effektive Strömungsquerschnitt nicht gemindert und somit keine oder allenfalls eine minimale Widerstandserhöhung auftreten wird.

Die im Folgenden aufgeführten vorteilhaften Varianten können separat angewendet werden oder auch untereinander kombiniert werden.

Eine weitere vorteilhafte Ausgestaltung sieht ein mit einer Flanschdichtung verbundenes Sieb vor. Das Sieb wird hierbei wahlweise an die Kühlerdichtung anvulkanisiert oder am Kühlereintritt in das Ölkühlegehäuse eingesteckt. Durch die definierte Form des Dichtungsflansches, der größer als der Nennquerschnitt des Wärmetauschereintrittes ist, können sich Schmutzpartikel in einem Bereich langsamer Strömung ablagern. Die hier abgeschiedenen Partikel werden bis zu einem Wechsel bzw. einer Entleerung der Rückhaltevorrichtung so gelagert, dass sie weder den Motor-Ölkühler noch das Ölkühlegehäuse schädigen können, da die Partikel in dem Siebkorb durch Durchtrittsöffnungen, die kleiner als die Partikelspitzen sind, bzw. Siebmaterialien, die dicker als die Partikelspitzen lang sind, auf Abstand zum Motor-Ölkühler gehalten werden, wodurch eine andauernde galvanische Korrosion mittels direkten Kontakts vermieden wird.

Eine andere vorteilhafte Weiterbildung sieht vor, dass das Vlies bzw. das Sieb im Übertritt zum Wärmetauscher angeordnet wird. Hierbei wird eine aus geometrischen Gründen notwendige Querschnittserweiterung genutzt, um ein Vliesfilter in den Übergang zum Wärmetauscher einzubringen. Das Filtermedium kann einen festen Rahmen haben, mit dem es in das Gehäuse eingebracht wird, es ist steif genug ausgeführt, um rahmenlos in der Querschnittserweiterung zu halten. Die im Kühlmittel angespülten korrosiven Partikel werden in dem Filtermedium festgehalten und haben durch die Beabstandung des Filtermediums keinen Kontakt mehr zum Gehäuse oder zu anderen Aluminiumbauteilen. Eine vorteilhafte Ausgestaltung sieht ein reversibles Sieb vor. Das Sieb ist so angeordnet, dass es entweder nach dem Motorabnahmelauf oder auch bei der 1. Fahrzeugwartung getauscht wird. Hierfür stellt der Motorölkühler oder das Ölkühlergehäuse eine Verschluss- bzw. Revisionsschraube bereit, die den wasserseitigen Kühlwassereintritt von außen zugänglich macht. Das Sieb ist als becherförmiges oder schlauchförmiges Sieb ausgeführt, welches entweder fest mit der Schraube verbunden oder zumindest allein durch diese zugänglich ist. Eine andere vorteilhafte Weiterbildung sieht vor, dass der Bereich um den Kühlereintritt eine Vertiefung aufweist, die geeignet ist, die Rückhaltevorrichtung in der Weise aufzunehmen, dass sie sich in die ebene Fläche des Plattenwärmetauschers erhebungslos einfügt. Weiterhin ist in einer vorteilhaften Weiterbildung vorgesehen, ein Siebkorbelement mit einem vorgeschalteten Flachfilterrückhalteelement zu kombinieren. Hierbei ist es z. B. möglich, die beiden Rückhalteelemente mit unterschiedlichen Trenngrenzen aufweisenden Sieb- bzw. Filtermedien auszustatten, was zu einer Vorabscheidung von gröberen Partikeln auf dem Flachfilter führt und zu einer Feinabscheidung im Bereich des Siebkorbes.

In einer weiteren vorteilhaften Ausgestaltung ist vorgesehen, ein zusätzliches Magnetelement an der Filterbefestigung.

Die Sieb-Verschluss-Schraube kann zusätzlich einen Magneten enthalten, der ein zusätzliches Zurückhalten der Späne gewährleistet.

Außerdem kann bei hängender Ölkühleranordnung über diese Verschluss-schraube der Ölkühler drainiert werden, wodurch Frostschäden während des Transportes und der Lagerung des Motors vor seiner Applikation vermieden werden.

Die Erfindung wird nachfolgend anhand von Ausführungsbeispielen in Zusammenhang mit den Zeichnungen näher erläutert. Es zeigen:
- Figur 1: einen Plattenwärmetauscher mit Wasserablassschraube,
- Figur 2: einen geschnittenen Plattenwärmetauscher mit rohrförmiger Rückhaltevorrichtung,
- Figur 3a: einen Plattenwärmetauscher mit ebener Rückhaltevorrichtung,
- Figur 3b: Plattenwärmetauscher mit ebener Rückhaltevorrichtung aus Fig. 3a,
- Figur 4: den schematisierten Wärmetauscher mit ebener Rückhalte- vorrichtung aus Fig. 3b,
- Figur 5: einen Plattenwärmetauscher mit aufgesetzter, rohrförmiger Rückhaltevorrichtung,
- Figur 6: den geschnittenen Plattenwärmetauscher aus Fig. 5.

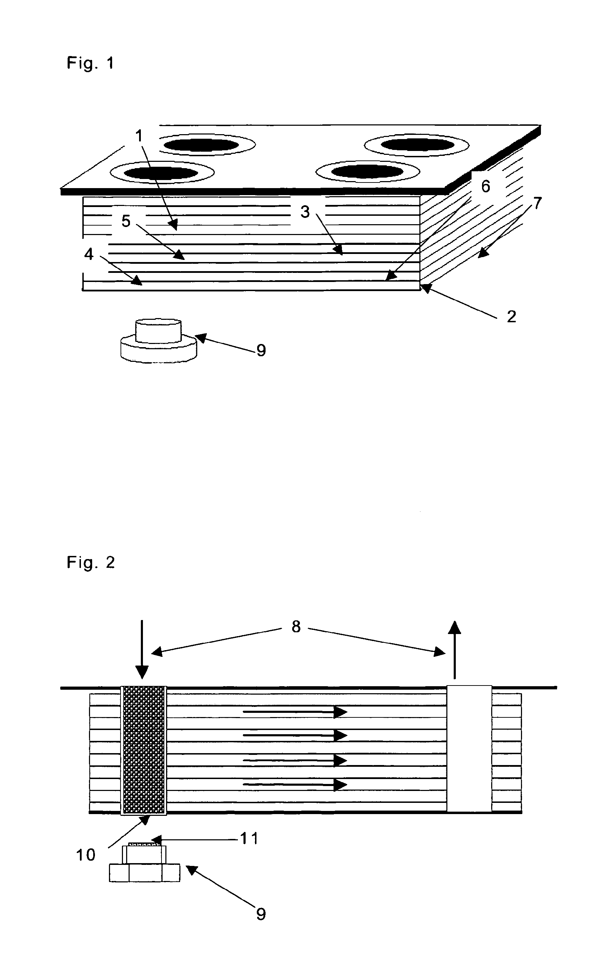

Die Fig. 1 zeigt einen Plattenwärmetauscher 1 mit einer Wasser- und/oder Ölablassschraube 9. Der Plattenwärmetauscher 1 besteht aus Fluid tragenden Platten 2 und einer Grundrohrschale mit Dichtflächen 3. Der Plattenwärmetauscher 1 verfügt über einen Medium1 -Eintritt 4, einen Medium1 - Austritt 5, einen Medium2 -Eintritt 6 und einen Medium2 -Austritt 7.

In Fig. 2 wird der geschnittene Plattenwärmetauscher 1 aus Fig. 2 mit rohrförmiger Rückhaltevorrichtung 10 im Medium1 -Eintritt 4, dem Wassereinlass offenbart. Die Rückhaltevorrichtung 10 ist als Rohrfilter, der in Strömungsrichtung 8 angeordnet ist, dargestellt. Die Wasserablass oder Revisionsschraube 9 wird in die äußerste Wärmetauscherplatte 2 mit dem Filtermedium 10 eingedreht und ist mit einem Magnet 11 versehen, der die magnetischen Partikel, die im Filter 10 zurückgehalten werden, anzieht.

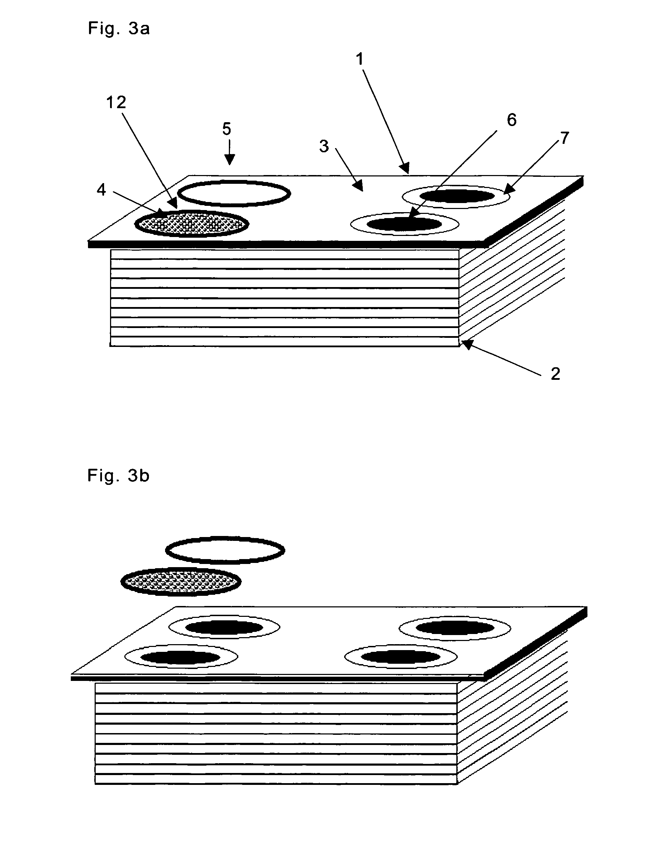

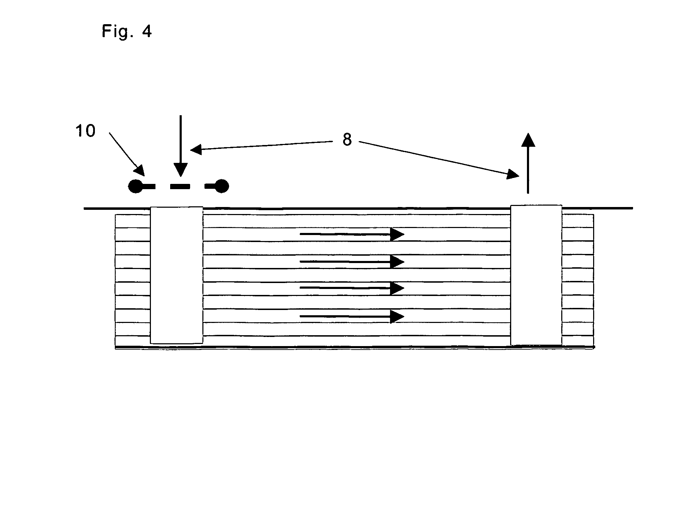

Der in Fig. 3a dargestellte Plattenwärmetauscher 1 weist um die wasserführenden Kanalenden 4, 5 jeweils eine Dichtung/Dichtkante 12 auf, in der ein Flachfilter 10, wie auch in Fig. 4 schematisch angedeutet, angeordnet sein kann.

Fig. 4 zeigt den schematisierten Wärmetauscher mit ebener Rückhaltevorrichtung 10 aus Fig. 3b mit den mittels Pfeilen 8 dargestellten Strömungsrichtungen der im Wärmetauscher 1 befindlichen Medien.

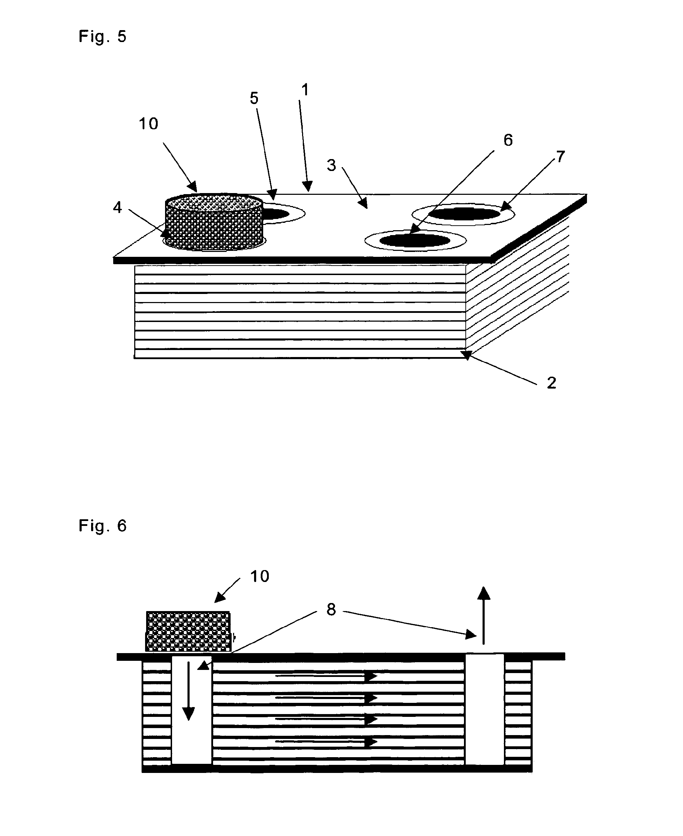

In Fig. 5 wird ein Plattenwärmetauscher 1 mit auf der Grundrohrschale 3 aufgesetzter rohrförmiger Rückhaltevorrichtung 10 dargestellt, die um den Wassereintritt 4 herum angeordnet ist. Die Durchströmung der Rückhaltevorrichtung 10 erfolgt von außen nach innen.

Fig. 6 offenbart den geschnittenen Plattenwärmetauscher aus Fig. 5, wobei der Lauf des Wassers mittels der in der Zeichnung angeordneten Pfeile dargestellt wird.

### Bezugszeichenliste

- 1: Plattenwärmetauscher
- 2: Fluidtragende Platte
- 3: Grundrohrschale mit Dichtfläche
- 4: Medium1 Eintritt
- 5: Medium1 Austritt
- 6: Medium2 Eintritt
- 7: Medium2 Austritt
- 8: Strömungsrichtung
- 9: Revisionsschraube
- 10: Filtermedium
- 11: Magnet
- 12: Dichtung /Dichtkante

## Patentansprüche

1. Rückhaltevorrichtung, umfassend wenigstens ein eine definierte Trenngrenze aufweisendes Rückhalteflächenelement, wenigstens ein Dichtelement und wenigstens ein Abstandshalteelement.

2. Rückhaltevorrichtung nach Anspruch 1,
**dadurch gekennzeichnet, dass** die Vorrichtung wenigstens ein magnetisches Rückhalteelement aufweist.

3. Rückhaltevorrichtung nach Anspruch 1 oder 2,
**dadurch gekennzeichnet, dass** die Rückhaltefläche im Wesentlichen eben ausgeführt ist.

4. Rückhaltevorrichtung nach einem oder mehreren der vorgenannten Ansprüche,
**dadurch gekennzeichnet, dass** die Rückhaltefläche im Wesentlichen rohrförmig ausgeführt ist.

5. Rückhaltevorrichtung nach einem oder mehreren der vorgenannten Ansprüche,
**dadurch gekennzeichnet, dass** die die Trenngrenze der Vorrichtung definierenden Durchtrittsöffnungen der Rückhaltefläche größer oder auch kleiner 150 µm sind.

6. Rückhaltevorrichtung nach einem oder mehreren der vorgenannten Ansprüche,
**dadurch gekennzeichnet, dass** die Rückhaltefläche aus einem Gewebe oder einem Gewirk oder einem Gestrick oder einem Vlies besteht.

7. Rückhaltevorrichtung nach einem oder mehreren der vorgenannten Ansprüche,
**dadurch gekennzeichnet, dass** die Rückhaltefläche bzw. das -element aus Edelstahl und/oder Kunststoff und/oder einem ähnlichen, jedoch korrosionsbeständigen Material besteht.

8. Rückhaltevorrichtung nach einem oder mehreren der vorgenannten Ansprüche,
**dadurch gekennzeichnet, dass** die Dichtung und das Rückhalteelement miteinander verbunden sind, insbesondere mittels Vulkanisation.

9. Ölkühler,
**dadurch gekennzeichnet, dass** eine Rückhaltevorrichtung nach einem oder mehreren der vorgenannten Ansprüche einsetzbar ist.

10. Verfahren zum Rückhalten von insbesondere ferritischen Partikeln in einem Kühlkreislauf,
**dadurch gekennzeichnet, dass** wenigstens eine Vorrichtung nach einem oder mehreren der vorgenannten Ansprüche Verwendung findet.
